# EUROPEAN PATENT SPECIFICATION

(11) **EP 1 521 984 B1**
(45) Date of publication and mention of the grant of the patent: **17.05.2006**
(21) Application number: 03738411.2
(22) Date of filing: 23.06.2003
(51) Int. Cl.: G02B 5/02, C03C 17/00, G02F 1/1335

(54) **METHOD OF MANUFACTURING A DIFFUSING REFLECTOR**
VERFAHREN ZUM HERSTELLEN EINES STREUREFLEKTORS
PROCEDE DE FABRICATION D'UN REFLECTEUR DIFFUSEUR

(30) Priority: 05.07.2002 EP 02077678
(43) Date of publication of application: 13.04.2005
(73) Proprietor: Koninklijke Philips Electronics N.V., 5621 BA Eindhoven (NL)
(72) Inventor: PEETERS, Martinus, P., J., NL-5656 AA Eindhoven (NL); DE BOER, Dirk, K., G., NL-5656 AA Eindhoven (NL); JOHNSON, Mark, T., NL-5656 AA Eindhoven (NL); DOORNKAMP, Ciska, NL-5656 AA Eindhoven (NL)
(74) Representative: Tol, Arie Jan Willem
(86) International application number: PCT/IB2003/002867
(87) International publication number: WO 2004/005979

(56) References cited:
- EP-A- 0 503 071
- EP-A- 0 549 890
- EP-A- 0 965 863

## Description

The invention pertains to a method of manufacturing a diffusing reflector composition comprising coating a substrate with a suspension of metal (nano)particles. The invention further relates to a diffusing reflector made by using the above method, and to a reflection type display apparatus comprising said diffusing reflector.

Reflective displays utilize an electro-optical layer, based on for instance a liquid crystalline, electrophoretic, electrochromic, electrowetting, or switching foil effect, and are formed in the flat-panel shape in thin and lightweight structure assuring low power consumption. Therefore, such display apparatus has been developed for wide application field such as a display of hand-held devices. An electro-optical substance such as liquid crystal is not self light-generating type and displays an image by selectively transmitting or shielding the external light beam. Such display apparatus can be classified into the transmission type and reflection type depending on the lighting system.

In the reflection type display apparatus, a display is realized by utilizing the incident light from the peripheral environment. It is essential to aim at improvement of brightness by effectively utilizing the incident light. Moreover, it is basically required to realize diffusing reflection of the incident light in the panel in order to realize the white display called as so-called paper white. Therefore, the reflection type display apparatus of the prior art comprises in many cases a diffusing reflection layer within the panel. This diffusing reflection layer has the surface including fine unevenness and also has the characteristic approximated to the perfect diffusion in order to show the external appearance of paper white as much as possible. However, it is difficult to conclude that the reflection characteristic is sufficient for practical use and it has been considered a problem of the reflection type display apparatus of the related art to improve the condition of unevenness from the stages of design and process in view of improving the reflection characteristic thereof.

In EP 965863 a diffusing reflector has been produced by a multi-stage process wherein a resin film having photosensitivity is formed on a substrate. In the next process, the resin film is patterned by the photolithography to provide a gathering of pillar-shaped bodies isolated each other. Subsequently, in the next process, heat treatment is performed to allow gentle deformation of individual pillar-shaped bodies in order to form the layer having uneven surface with the maximum inclination angle under 12°. As the final process, a metal film is formed on the gently modified uneven layer. This method suffers from the disadvantage that it is very labor-intensive and therefore expensive and that the required roughness as obtained in the heat treatment is partly undone by overlaying the layer with a metal layer, for instance by sputtering an aluminum layer onto the roughened resin layer. The production costs of TFT arrays further increase with the number of photomasks and the yield generally decreases as the number of photomasks increases. Another disadvantage of the above method of creating patterns by photolithography is that interference colors may appear upon illumination of the surface when these patterns are not sufficiently random. It is therefore an object of the present invention to provide a method of manufacturing a diffusing reflector that can easily be performed, is inexpensive and devoid of the above disadvantages.

Such method comprising coating a substrate with a suspension of metal particles was found by applying to the suspension of metal nano- and/or sub-micron particles, a silane derivative as additive with at least one methyl group and at least one alkoxy group and annealing the coated substrate at elevated temperature.

It was found that the addition of the silane derivative leads to improved thermal stability allowing the conductive mirror to anneal at higher temperature. Annealing at higher temperature leads to improved conductivity of the mirror. Annealing temperatures are above 350°C, more preferably about 500°C. At these annealing temperatures the nanoparticles form clusters with typical dimensions of about 1 µm with and 100 mm height. The silane derivative is preferably methyl trialkoxysilane, the alkoxy moieties having 1 to 4 carbon atoms. With even more preference the silane derivative is methyl trimethoxysilane, methyl triethoxysilane, or a mixture thereof.

Particularly good results are obtained when the suspension of the metal nanoparticles comprises <20 vol.% of the silane derivative, preferably 1-15, more preferably 5-10 vol.%.

When a diffuse mirror for a reflective display is made the nanoparticles are preferably colloidal silver sol particles. However, also gold, platinum, rhodium, iridium, palladium, chromium, copper, and aluminum, and mixtures thereof may be selected. In passive matrix displays a back up metal may be used to reduce the line resistance, if necessary. In active matrix displays rows and columns may be formed by standard metallization, for instance with aluminum. In active matrix displays the deposition of the metal is the last step for making the active plate. This metal layer thus serves to make a mirror and also to make metal connections (vias) between the TFT's.

The displays that are made by the present invention have a perfect paper white look and no interference colors appear when the layers are illuminated. The method is furthermore substantially cheaper than the existing methods of making these displays. It is possible to make pixels with a separation of 10 to 20 µm, and even smaller separation can be achieved by defining "mushroom-shaped" lines between the pixels before applying the metal. This may be done in a "paddo" process to separate cathode lines in poly LED matrix displays, such as has been described in OE magazine, vol. 1, nr. 2 (Feb. 2001), p.18 (see also http://oemagazme.com/fromTheMagazme/feb01/brightness.html).

The above invention therefore also pertains to a reflection type display apparatus comprising at least one substrate, an electro-optical layer, the diffusing reflector of the present invention, and at least one electrode.

The diffusing reflector produced by the method explained above can be comprised within the reflection type display apparatus. In this case, the reflection type display apparatus is provided, as the basic structure, with a first transparent substrate arranged in the incident side, a second substrate joined with the first substrate via the predetermined gap and is arranged in the opposite side, an electro-optical layer located in the first substrate side within the gap, a diffusing reflection layer located in the second substrate side within the gap and an electrode for impressing a voltage to the electro-optical layer formed in at least one substrate among the first and second substrates. The diffusing reflection layer is composed of a resin film forming the heaping areas and a metal film formed on the heaping areas.

The invention can be applied to make active or passive plates with diffuse mirrors and electrical connections for reflective displays and for other displays where metal electrodes are used, such as LCD's, electrophoretic, electrochrome and electro-wetting displays, foil displays, switching mirrors, PALC displays, and polyLED's.

The invention is further illustrated by the following non-limiting figures and examples.

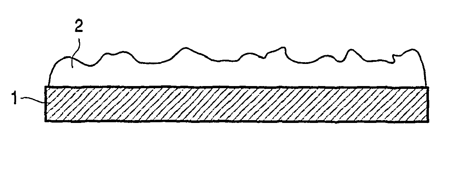

Fig. 1 shows a schematic view of the diffusion reflector of the present invention.

A preferred embodiment of the present invention will be explained in detail with reference to the accompanying drawing. Fig. 1 shows a diffusing reflector of the present invention. As illustrated in Fig. 1, a substrate 1, for example, consisting of glass material or the like. A resin film 2 having photosensitivity may be formed on the substrate 1, although this is not necessary. As a resin film 2, a photoresist, for example, may be used. In this embodiment, a film is formed in the thickness of about 1.0 µm by coating of the photoresist with the spin coating or printing method. Next, in the process, a gathering of pillar-shaped bodies is provided as a film 3 by patterning the substrate or the resin film 2 with the nanoparticle metal suspension of the invention using spin-coating. Other processes such as photolithography may also be used. In the photolithography method, exposing process is conducted through irradiation of ultraviolet ray and thereafter the developing process is performed. Adequate irradiation energy of ultraviolet ray is ranged from 150 mJ to 250 mJ. When irradiation energy is less than 150 mJ, the energy is too low and when it exceeds 250 mJ, the energy is too high, and thereby side etching may be generated. The metal film 3 is formed by depositing the nanoparticle metal material, for example, such as aluminum, silver or the like on the substrate 1 or the resin film 2 by spin-coating, sputtering, or vacuum evaporation.

### Example

Sub-micron silver particles (14.7 g, ex Mitsui) were added to 10.14 g of water and 2.587 g of 5 wt.% polyvinylalcohol, and wet-ball milled for one night on a roller conveyer in the presence of 45 g of glass pearls, to obtain an aqueous dispersion of 53.4 wt.% Ag.
Two hydrolysis mixtures were prepared by mixing the component of A or B:
A) 40 g MTMS (methyl trimethoxy silane)
   0.87 g TEOS (tetraethyl orthosilicate)
   32 g water
   4.5 g ethanol
B) 40 g MTMS
   40 g water

Coating liquids were prepared by mixing the silver dispersion with one of the hydrolysis mixtures A or B, in amount s as indicated in the Table, after which the mixture was spin-coated on a glass substrate by spin-coating these coating liquids for 10 seconds at 50 rpm, followed by 40 seconds at 300 rpm. Samples were dried at 35°C. Curing was performed by heating in air for 90 minutes at 450°C or 580°C.

**Table**

| Silver Dispersion (g r) | hydrolysis mixture | | vol.% MTMS* |
|---|---|---|---|
| | A (g) | B (g) | |
| 4 | 0.045 | | 3 |
| 4 | | 0.046 | 3 |
| 4 | 0.129 | | 8 |
| 4 | | 0.13 | 8 |

| | | | |
|---|---|---|---|
| *** at a density of 2 g/ml** | | | |

The coated samples were measured for their angle dependent scattering reflection properties and reflection/transmission properties. It was found that the samples showed excellent reflection in the visible region. The intensity of the reflected light was 4 times as intense (at the angle of incidence) with respect to a reference BaSO₄ sample. At an angle 15° of the angle of incidence the intensity of the reflected light was 3 to 3.5 as intense as purely diffuse reflecting BaSO4. At an angle 50° of the angle of incidence to intensity of the reflected light amount ~ 0.5 times that of BaSO4.

## Claims

1. A method of manufacturing a diffusing reflector comprising coating a substrate with a suspension of metal nanoparticles and annealing the coated substrate at elevated temperature, **characterized in that** the suspension of metal nanoparticles comprises a silane derivative as additive with at least one methyl group and at least one alkoxy group.

2. The method of manufacturing a diffusing reflector according to claim 1 wherein the annealing is performed at a temperature above 350°C.

3. A diffusing reflector comprising an annealed substrate coated with a suspension of metal nanoparticles and an additive, **characterized in that** the additive comprises a silane derivative with at least one methyl group and at least one alkoxy group.

4. The diffusing reflector of claim 3 wherein the silane derivative is methyl trialkoxysilane, the alkoxy moieties having 1 to 4 carbon atoms.

5. The diffusing reflector of claim 4 wherein the silane derivative is methyl trimethoxysilane, methyl triethoxysilane, or a mixture thereof.

6. The diffusing reflector of any one of claims 3 to 5 wherein the suspension of the metal nanoparticles comprises <20 vol.% of the silane derivative.

7. The diffusing reflector of any one of claims 3 to 6 wherein the metal nanoparticles are selected from gold, silver, platinum, rhodium, iridium, palladium, chromium, copper, and aluminum, and mixtures thereof.

8. The diffusing reflector of any one of claims 3 to 7 wherein the metal nanoparticles are colloidal silver sol particles.

9. A display apparatus comprising at least one substrate, an electro-optical layer, the diffusing reflector of any one of claims 3-8, and at least one electrode.

## Patentansprüche

1. Verfahren zur Herstellung eines Diffusionsreflektors, das umfasst: Beschichten eines Substrats mit einer Suspension aus Metallnanopartikeln und Tempern des beschichteten Substrats bei höherer Temperatur, **dadurch gekennzeichnet, dass** die Suspension aus Metallnanopartikeln ein Silanderivat als Additiv mit zumindest einer Methylgruppe und zumindest einer Alkoxygruppe umfasst.

2. Verfahren zur Herstellung eines Diffusionsreflektors nach Anspruch 1, in dem das Tempern bei einer Temperatur oberhalb von 350°C ausgeführt wird.

3. Diffusionsreflektor, umfassend ein getempertes Substrat, das mit einer Suspension aus Metallnanopartikeln und einem Additiv beschichtet ist, **dadurch gekennzeichnet, dass** das Additiv ein Silanderivat mit zumindest einer Methylgruppe und zumindest einer Alkoxygruppe umfasst.

4. Diffusionsreflektor nach Anspruch 3, in dem das Silanderivat Methyltrialkoxysilan ist, wobei die Alkoxyanteile 1 bis 4 Kohlenstoffatome aufweisen.

5. Diffusionsreflektor nach Anspruch 4, in dem das Silanderivat Methyltrimethoxysilan, Methyltriethoxysilan oder eine Mischung davon ist.

6. Diffusionsreflektor nach einem der Ansprüche 3 bis 5, in dem die Suspension der Metallnanopartikel < 20 Vol.-% des Silanderivats umfasst.

7. Diffusionsreflektor nach einem der Ansprüche 3 bis 6, in dem die Metallnanopartikel aus Gold, Silber, Platin, Rhodium, Iridium, Palladium, Chrom, Kupfer und Aluminium sowie Mischungen davon ausgewählt worden sind.

8. Diffusionsreflektor nach einem der Ansprüche 3 bis 7, in dem die Metallnanopartikel Kolloidalsilber-Sol-Partikel sind.

9. Displaygerät mit zumindest einem Substrat, einer elektrooptischen Schicht, dem Diffusionsreflektor nach einem der Ansprüche 3-8 und zumindest einer Elektrode.

## Revendications

1. Procédé pour la fabrication d'un réflecteur diffuseur comprenant le revêtement d'un substrat avec une suspension de nanoparticules métalliques et le recuit du substrat revêtu à une température augmentée, **caractérisé en ce que** la suspension de nanoparticules métalliques contient un dérivé de silane comme additif avec au moins un groupe de méthyle et au moins un groupe alkoxy.

2. Procédé pour la fabrication d'un réflecteur diffuseur selon la revendication 1, dans lequel le recuit est effectué à une température supérieure à 350 °C.

3. Réflecteur diffuseur comprenant un substrat recuit revêtu d'une suspension de nanoparticules métalliques et d'un additif, **caractérisé en ce que** l'additif contient un dérivé de silane avec au moins un groupe de méthyle et au moins un groupe alkoxy.

4. Réflecteur diffuseur selon la revendication 3, dans lequel le dérivé de silane est constitué par du trialkoxysilane de méthyle, les parties d'alkoxy comptant 1 à 4 atome(s) de carbone.

5. Réflecteur diffuseur selon la revendication 4, dans lequel le dérivé de silane est constitué par du triméthoxysilane de méthyle, du triéthoxysilane de méthyle ou un de leurs mélanges.

6. Réflecteur diffuseur selon l'une des revendications 3 à 5, dans lequel la suspension de nanoparticules métalliques contient < 20 % en volume du dérivé de silane.

7. Réflecteur diffuseur selon l'une des revendications 3 à 6, dans lequel les nanoparticules sont choisies parmi l'or, l'argent, le platine, le rhodium, l'iridium, le palladium, le chrome, le cuivre et l'aluminium et leurs mélanges.

8. Réflecteur diffuseur selon l'une des revendications 3 à 7, dans lequel les nanoparticules métalliques sont constituées par des particules de sol d'argent colloïdales.

9. Appareil de reproduction comprenant au moins un substrat, une couche électro-optique, le réflecteur diffuseur selon l'une des revendications 3 à 8 et au moins une électrode.
